# EUROPEAN PATENT APPLICATION

(11) **EP 4 768 088 A1**
(43) Date of publication of application: **01.07.2026**
(21) Application number: 25867166.8
(22) Date of filing: 18.08.2025
(51) Int. Cl.: A62C 3/07, A62C 3/16, A62C 37/38, A62C 35/68, A62C 31/02, B60L 58/24, B60L 58/10, H01M 50/24, H01M 50/249, G08B 25/14

(54) **FIRE PREVENTION APPARATUS FOR VEHICLE AND VEHICLE COMPRISING SAME**

(30) Priority: 19.09.2024 KR 20240126892; 03.02.2025 KR 20250013313
(71) Applicant: LG Energy Solution, Ltd., Seoul 07335 (KR)
(72) Inventor: LEE, Bum-Hee, Daejeon 34122 (KR)
(74) Representative: Plasseraud IP
(86) International application number: PCT/KR2025/012484
(87) International publication number: WO 2026/063640

(57) **Abstract**

A fire prevention apparatus for a vehicle according to the present disclosure includes a tubular structure configured to deliver the fire extinguishing agent to the battery pack; and an accommodation unit provided in the vehicle to accommodate the tubular structure, and the tubular structure is configured such that at least a portion thereof is drawn to the outside of the vehicle.

## Description

This application is based on and claims priority from Korean Patent Application No. 10-2024-0126892, filed on September 19, 2024, and Korean Patent Application No. 10-2025-0013313, filed on February 3, 2025, with the Korean Intellectual Property Office, the disclosure of which is incorporated herein in its entirety by reference.

### TECHNICAL FIELD

The present disclosure relates to a fire prevention apparatus for a vehicle and a vehicle including the same, and more specifically, to a fire prevention apparatus for a vehicle, which is provided to a vehicle equipped with a rechargeable battery pack to prevent a fire caused by a thermal event of the corresponding battery pack, and a vehicle including the fire prevention apparatus for a vehicle.

### BACKGROUND ART

Generally, a secondary battery refers to a battery that can be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as a battery pack including a number of secondary batteries connected in series and/or parallel are used as a power source for vehicles, interest in and research on technologies for preventing fires in the vehicle battery pack are increasing.

However, the existing technology has a problem of not being able to properly respond to thermal runaway or fire of the battery pack because they cool the battery pack using a limited amount of cooling liquid stored within the vehicle. To address this, storing a large amount of cooling liquid or fire extinguishing agent within the vehicle may lower the performance of the vehicle and lead to energy inefficiency.

Furthermore, the existing technology has a problem in that when the power supply within the vehicle is cut off due to a thermal event occurring in the battery pack for a vehicle, the operation of the cooling system provided in the vehicle is also stopped, so the vehicle user is directly exposed to the risk of thermal runaway, fire, explosion, etc. of the battery pack.

### DISCLOSURE

### Technical Problem

The technical problem that the present disclosure seeks to solve is to provide a fire prevention apparatus for a vehicle, which may prevent thermal runaway or fire of a battery pack even when the power supply within the vehicle is cut off due to a thermal event occurring in the battery pack without the need to load a large amount of fire extinguishing agent into the corresponding vehicle in preparation for a fire in the battery pack applied to the vehicle, and a vehicle including the fire prevention apparatus for a vehicle.

### Technical Solution

A fire prevention apparatus for a vehicle according to one aspect of the present disclosure is a system configured to provide a fire extinguishing agent to a battery pack of the vehicle, and comprises: a tubular structure configured to deliver the fire extinguishing agent to the battery pack; and an accommodation unit provided in the vehicle to accommodate the tubular structure, wherein the tubular structure is configured such that at least a portion thereof is drawn to the outside of the vehicle.

In an embodiment, the tubular structure may include a coupler drawn to the outside of the vehicle and configured to connect to a corresponding coupler of a fire extinguishing agent supply device located outside the vehicle; and a connection tube having one end connected to the coupler and the other end connected to the battery pack or a nozzle configured to spray the fire extinguishing agent to the battery pack.

In an embodiment, at least a portion of the connecting tube may have a bellows structure that is expandable and shrinkable in length.

In an embodiment, the connection tube may include a curved portion that is concavely curved downwards based on the vehicle to block foreign substances from entering the battery pack.

In an embodiment, the curved portion may have flexibility, and the fire prevention apparatus for a vehicle may further include a support structure that supports the curved portion so that the shape of the curved portion is maintained.

In another embodiment, the curved portion may have a fixed shape.

In an embodiment, the curved portion may include a discharge port for discharging foreign substances, and
the fire prevention apparatus for a vehicle may further include a valve for opening or closing the discharge port.

In an embodiment, the accommodation unit may include an accommodation space for accommodating the tubular structure and an opening communicating with the accommodation space, and the fire prevention apparatus for a vehicle may further include an opening device configured to open or close the opening.

In an embodiment, the opening device may be configured to automatically open the opening when a predetermined control signal is received or the temperature of the battery pack exceeds a predetermined threshold value in a state that the opening is closed.

In an embodiment, the opening device may include a door configured to open or close the opening; and a locking unit coupled to the door that closes the opening to lock the door, and the locking unit may be configured to release the coupling with the door when the control signal is received or when the temperature of the battery pack exceeds the predetermined threshold value.

In an embodiment, the accommodation unit may be configured to draw at least a portion of the tubular structure accommodated in the accommodation space to the outside of the accommodation unit through the opening when the opening is opened by the opening device.

In an embodiment, the accommodation unit may include an elastic structure positioned in the accommodation space and configured to draw at least the portion of the tubular structure to the outside of the accommodation unit.

In an embodiment, the tubular structure may include a flange protruding from an outer surface of at least the portion, and the elastic structure may include a compression spring having one end fixed in the accommodation space and the other end in contact with the flange.

A vehicle according to another aspect of the present disclosure includes the fire prevention apparatus for a vehicle described above.

### Advantageous Effects

According to the present disclosure, a tubular structure provided in a vehicle is configured to deliver an externally supplied fire extinguishing agent to the battery pack of the vehicle, thereby eliminating the need to load a large amount of fire extinguishing agent into the vehicle in preparation for a fire in the battery pack applied to the vehicle, and it is possible to prevent thermal runaway or fire in the battery pack even when the power supply within the vehicle is cut off due to a thermal event occurring in the battery pack.

In addition, by configuring that at least a portion of the tubular structure is drawn to the outside of the vehicle, the risk of a vehicle user or worker having to approach the corresponding vehicle closely to respond to thermal runaway or fire of the battery pack may be avoided, and the safety of cooling or fire extinguishing operations of the battery pack may be improved.

In addition, the opening of the accommodation unit accommodating the tubular structure is configured to automatically open according to a predetermined control signal or the temperature of the battery pack, thereby facilitating the use of the tubular structure and shortening the corresponding time of the vehicle user in the event of thermal runaway or fire of the battery pack.

Furthermore, a person having ordinary skill in the art to which the present disclosure belongs will be able to clearly understand from the following description that various embodiments according to the present disclosure can solve various technical problems not mentioned above.

### DESCRIPTION OF DRAWINGS

FIG. 1 is a block diagram illustrating a fire prevention apparatus for a vehicle according to an embodiment of the present disclosure.
FIG. 2 is a perspective view illustrating a fire prevention apparatus for a vehicle according to an embodiment of the present disclosure.
FIG. 3 is a drawing illustrating an end portion of a tubular structure accommodated in an accommodation unit of the fire prevention apparatus for a vehicle illustrated in FIG. 2.
FIG. 4 is a drawing illustrating an extended state of the tubular structure illustrated in FIG. 3.
FIG. 5 is a drawing illustrating a portion of the tubular structure illustrated in FIG. 2.
FIG. 6 is a drawing illustrating a portion of a tubular structure according to a modified embodiment.
FIG. 7 is a drawing illustrating a tubular structure accommodated in an accommodation unit of a fire prevention apparatus for a vehicle according to an embodiment of the present disclosure.
FIG. 8 is a drawing illustrating a state in which a tubular structure is drawn from the accommodation unit illustrated in FIG. 7.
FIG. 9 is a drawing illustrating a vehicle according to an embodiment of the present disclosure.
FIG. 10 is a drawing illustrating the connection state between a vehicle according to an embodiment of the present disclosure and a fire extinguishing agent supply device.

### BEST MODE

Hereinafter, in order to clarify the solution corresponding to the technical challenge of the present disclosure, embodiments according to the present disclosure will be described in detail with reference to the attached drawings. However, when explaining the present disclosure, if a description of a related publicly known technology obscures the gist of the present disclosure, the description thereof may be omitted.

In addition, the terms used in this specification are terms defined in consideration of the functions in the present disclosure, and these may vary depending on the intention or custom of the designer, manufacturer, etc. Therefore, the definitions of the terms described below should be made based on the contents throughout this specification.

In addition, even without separate explanation, it is noted in advance that various embodiments related to different components of the present disclosure may be combined with each other in some cases, as long as they do not technically conflict.

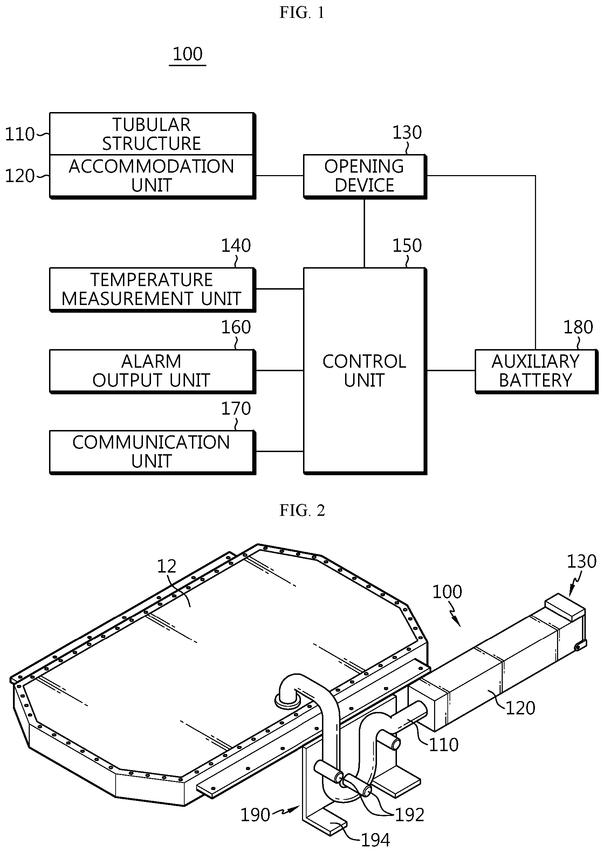

FIG. 1 is a block diagram illustrating a fire prevention apparatus for a vehicle according to an embodiment of the present disclosure.

As illustrated in FIG. 1, a fire prevention apparatus 100 for a vehicle according to an embodiment of the present disclosure includes a tubular structure 110, an accommodation unit 120, and an opening device 130.

The tubular structure 110 is connected to a fire extinguishing agent supply device located outside the vehicle and is configured to deliver a fire extinguishing agent supplied from the corresponding fire extinguishing agent supply device to the battery pack of the vehicle.

As will be described further below, the tubular structure 110 may include a coupler configured to be connectable to a corresponding coupler of the fire extinguishing agent supply device, and a connection tube having one end connected to the coupler and the other end connected to the battery pack or a nozzle configured to spray the fire extinguishing agent to the battery pack.

The accommodation unit 120 is configured to accommodate at least a portion of the tubular structure 110. The accommodation unit 120 includes an accommodation space that accommodates the tubular structure, and an opening communicating with the accommodation space.

The opening device 130 is configured to open and close the opening of the accommodation unit 120. In particular, the opening device 130 is configured to automatically open the opening of the accommodation unit 120 when a predetermined control signal is received or when the temperature of the battery pack exceeds a predetermined threshold value.

In an embodiment, the fire prevention apparatus 100 for a vehicle according to the present disclosure may include a temperature measurement unit 140. The temperature measurement unit 140 may be configured to measure the temperature of the battery pack.

For example, the temperature measurement unit 140 may be configured to measure the temperature of multiple batteries included in the battery pack, individually for each battery or individually for a pre-designated group of batteries. To this end, the temperature measurement unit 140 may include multiple temperature sensors.

In this case, the fire prevention apparatus 100 for a vehicle may further include a control unit 150. The control unit 150 may be configured to detect a thermal event of the battery pack based on the temperature measured by the temperature measurement unit 140. To this end, the control unit 150 may include one or more general-purpose processors or application-specific integrated circuits (ASICs) for executing control logic, and may optionally further include hardware such as memory, registers, etc. according to an embodiment.

In an embodiment, the fire prevention apparatus 100 for a vehicle according to the present disclosure may include an alarm output unit 160. The alarm output unit 160 may be configured to output a predetermined alarm signal when the temperature measured by the temperature measurement unit 140 exceeds a predetermined threshold value. To this end, the alarm output unit 160 may include at least one of a visual output device such as a light-emitting diode, a monitor, a display panel, or a touch screen, and an audio generating device such as a speaker.

For example, if the temperature measured by the temperature measurement unit 140 exceeds the threshold value, the control unit 150 may determine that a thermal event has occurred in the battery pack, and control the alarm output unit 160 to output an alarm signal in a manner recognizable to the user of the vehicle. For reference, the threshold value may be determined in advance by considering the temperature of a battery pack or a unit battery included in the battery pack in which thermal runaway of the battery pack occurs.

The fire prevention apparatus 100 for a vehicle according to an embodiment of the present disclosure may include a communication unit 170. The communication unit 170 may be configured to communicate with a predetermined communication terminal configured to transmit a control signal related to the operation of the opening device 130.

In this case, the communication terminal may be a wireless communication terminal, such as a smart key or mobile phone, carried by the user of the vehicle. That is, the communication unit 170 may be configured to perform wireless communication with the communication terminal.

For example, when the communication unit 170 receives from the communication terminal a control signal that includes a command to open the opening of the accommodation unit 120, the control unit 150 may control the opening device 130 to open the opening of the accommodation unit 120.

In an embodiment, the fire prevention apparatus 100 for a vehicle according to the present disclosure may include an auxiliary battery 180 configured to discharge independently of the battery pack and to provide power to the opening device 130 described above. In this case, the auxiliary battery 180 may be positioned at a location separate from the battery pack.

In this way, the fire prevention apparatus 100 for a vehicle according to an embodiment of the present disclosure may open the opening of the accommodation unit 120 using the power of the auxiliary battery 180 even when the power of the battery pack that provides the driving power of the vehicle is cut off.

FIG. 2 is a perspective view illustrating a fire prevention apparatus for a vehicle according to an embodiment of the present disclosure.

As illustrated in FIG. 2, the fire prevention apparatus 100 for a vehicle according to an embodiment of the present disclosure is installed in a vehicle and configured to provide a fire extinguishing agent to the battery pack 12 of the vehicle. To this end, the fire prevention apparatus 100 for a vehicle includes a tubular structure 110, an accommodation unit 120, and an opening device 130.

The tubular structure 110 is configured to deliver the fire extinguishing agent supplied from the fire extinguishing agent supply device located outside the vehicle to the battery pack 12. To this end, the tubular structure 110 is configured such that at least a portion thereof including a terminal end may be drawn to the outside of the vehicle.

The accommodation unit 120 is configured to accommodate at least a portion of the tubular structure 110. As described further below, the accommodation unit 120 includes an accommodation space that accommodates the tubular structure 110 and an opening communicating with the accommodation space.

In an embodiment, the fire prevention apparatus 100 for a vehicle may further include a support structure 190 for supporting at least a portion of the tubular structure 110. In this case, the support structure 190 may include a stopper 192 that contacts the tubular structure 110 and restricts movement of the tubular structure 110, and a fixing frame 194 that fixes the stopper 192 at a predetermined position.

The opening device 130 is configured to open and close the opening of the accommodation unit 120. In particular, the opening device 130 is configured to automatically open the opening of the accommodation unit 120 when a predetermined control signal is received or when the temperature of the battery pack 12 exceeds a predetermined threshold value.

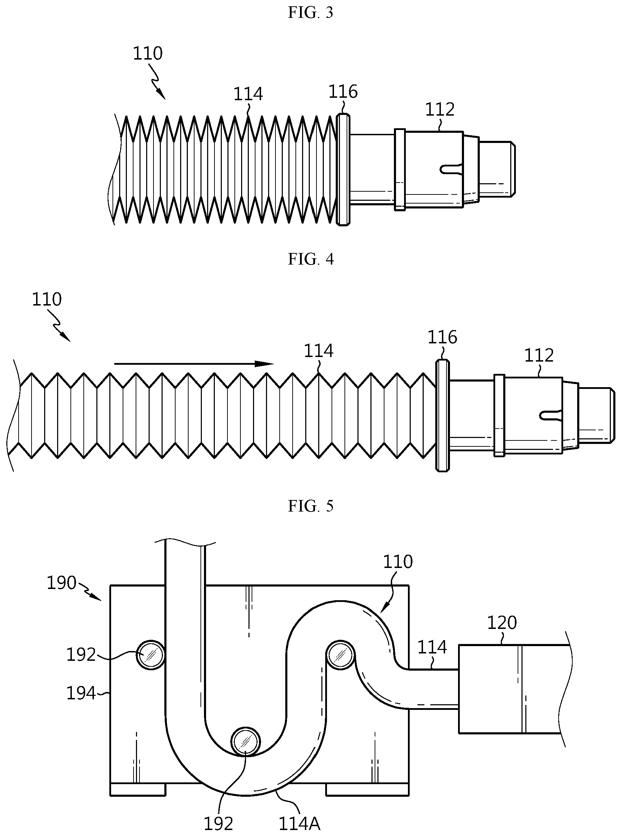

FIG. 3 is a drawing illustrating an end portion of a tubular structure 110 accommodated in an accommodation unit 120 of the fire prevention apparatus for a vehicle illustrated in FIG. 2.

As illustrated in FIG. 3, the tubular structure 110 may include a coupler 112 and a connection tube 114.

The coupler 112 may be configured to be connected to a corresponding coupler of a fire extinguishing agent supply device located outside the vehicle. The coupler 112 may be manufactured from a metal material or synthetic resin having rigidity that does not deform during the coupling process with the corresponding coupler or the fire extinguishing agent supply process.

The connection tube 114 may be configured such that one end thereof is connected to the coupler 112 and the other end thereof is connected to the battery pack 12 or a nozzle (not shown) configured to spray a fire extinguishing agent to the battery pack 12. The connection tube 114 may be manufactured to be flexible.

In an embodiment, at least a portion of the connection tube 114 may have a bellows structure that is expandable and shrinkable in length. In this way, since the connection tube 114 has a bellows structure, the space required to install the connection tube 114 inside a vehicle may be reduced.

In an embodiment, the tubular structure 110 may include a flange 116 protruding from an outer surface of its distal end. As described further below, the flange 116 may be used to draw the tubular structure 110 outward from the vehicle through the opening in the accommodation unit 120.

FIG. 4 is a drawing illustrating an extended state of the tubular structure 110 illustrated in FIG. 3.

As illustrated in FIG. 4, the tubular structure 110 may be drawn to the outside of the vehicle through the opening of the accommodation unit 120 as the length of the connection tube 114 is extended.

The coupler 112 of the tubular structure 110 drawn out as above may be connected to a corresponding coupler of a fire extinguishing agent supply device located outside the vehicle.

FIG. 5 is a drawing illustrating a portion of the tubular structure 110 illustrated in FIG. 2.

As illustrated in FIG. 5, the connection tube 114 of the tubular structure 110 may extend from the accommodation unit 120 into the interior of the vehicle and be connected to the battery pack 12 of the vehicle. The connection tube 114 may include a curved portion 114A configured to be concavely curved downwards based on the corresponding vehicle to block foreign substances from entering the battery pack 12. For example, the curved portion 114A may be curved in a U-shape or an S-shape.

In an embodiment, the curved portion 114A of the connection tube 114 may be flexible. In this case, the fire prevention apparatus 100 for a vehicle may include a support structure 190 configured to support the curved portion 114A so that the shape of the curved portion 114A is maintained. To this end, the support structure 190 may include a stopper 192 that restricts movement of the curved portion 114A, and a fixing frame 194 that fixes the stopper 192 at a predetermined position.

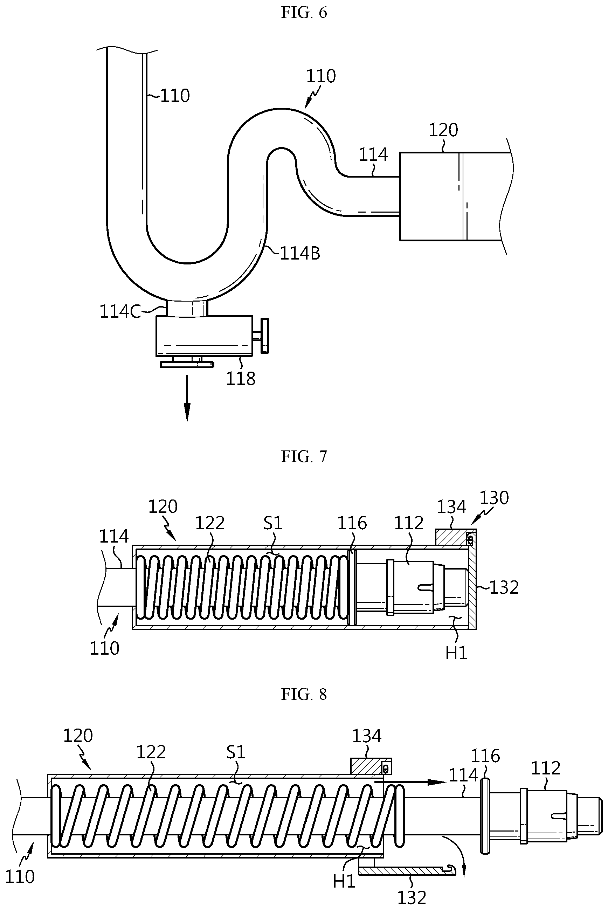

FIG. 6 is a drawing illustrating a portion of a tubular structure 110 according to a modified embodiment.

As illustrated in FIG. 6, the connection tube 114 of the tubular structure 110 may include a curved portion 114B configured to be concavely curved downwards based on the corresponding vehicle to block foreign substances from entering the battery pack 12.

For example, the curved portion 114B may be curved into a U-shape or an S-shape. The curved portion 114B may be manufactured to have a fixed shape. In this case, the remaining portion of the connection tube 114, excluding the curved portion 114B, may be manufactured from a flexible material.

In an embodiment, the curved portion 114B may include a valve 118 that opens or closes a discharge port 114C that discharges foreign substances.

For example, the valve 118 may be configured to close the discharge port 114C when no foreign substances are captured in the curved portion 114B or the amount of captured foreign substances is less than a predetermined reference amount, and to open the discharge port 114C when more than a predetermined reference amount of foreign substances are captured in the curved portion 114B. To this end, the fire prevention apparatus 100 for a vehicle may further include a sensor (not shown) that detects foreign substances captured in the curved portion 114B.

FIG. 7 is a drawing illustrating a tubular structure 110 accommodated in an accommodation unit 120 of a fire prevention apparatus for a vehicle according to an embodiment of the present disclosure.

As illustrated in FIG. 7, the accommodation unit 120 is provided inside the body of the vehicle and may accommodate at least a portion of the tubular structure 110. In this case, the accommodation unit 120 may accommodate a portion of the coupler 112 and the connection tube 114 among the components of the tubular structure 110.

In an embodiment, the connection tube 114 of the tubular structure 110 may have a bellows structure that is expandable and shrinkable in length. In this case, the connection tube 114 may be accommodated in the accommodation unit 120 in a contracted state in length.

The accommodation unit 120 may include an accommodation space S1 for accommodating the tubular structure 110, and an opening H1 communicating with the accommodation space S1. In this case, the fire prevention apparatus for a vehicle according to an embodiment of the present disclosure may include an opening device 130 configured to open or close the opening H1 of the accommodation unit 120.

The opening device 130 may be configured to automatically open the opening H1 of the accommodation unit 120 when a predetermined control signal is received or the temperature of the battery pack 12 exceeds a predetermined threshold value while the opening H1 is closed.

For this purpose, the opening device 130 may include a door 132 configured to close or open the opening H1 of the accommodation unit 120, and a locking unit 134 that locks the door 132 by coupling with the door 132 that closes the opening H1.

In an embodiment, the door 132 may be implemented as a swing door with a hinge. Additionally, the locking unit 134 may be configured to release the coupling with the door 132 when the control signal is received or when the temperature of the battery pack 12 exceeds the predetermined threshold value.

In an embodiment, the accommodation unit 120 may be configured to draw at least a portion of the tubular structure 110 accommodated in the accommodation unit 120 to the outside of the accommodation unit 120 through the opening H1 when the opening H1 is opened by the opening device 130.

For this purpose, the accommodation unit 120 may include an elastic structure 122. The elastic structure 122 may be arranged in the accommodation space S1 and configured to draw at least a portion of the tubular structure 110 to the outside of the accommodation unit 120.

In an embodiment, the elastic structure 122 may include a compression spring. In this case, the compression spring may be configured to have one end fixed in the accommodation space S1. For example, one end of the compression spring may be fixed to the interior surface of the accommodation unit 120 that forms the accommodation space S1. The other end of the compression spring may be configured to contact the flange 116 of the tubular structure 110.

FIG. 8 is a drawing illustrating a state in which a tubular structure 110 is drawn out from the accommodation unit 120 illustrated in FIG. 7.

As illustrated in FIG. 8, when the coupling between the door 132 of the opening device 130 and the locking unit 134 is released, the door 132 is opened by the elastic force of the elastic structure 122, and the tubular structure 110 may be drawn to the outside of the accommodation unit 120 through the opening H1 of the accommodation unit 120.

As a result, the risk of vehicle users or workers having to approach the vehicle closely to respond to thermal runaway or fire occurring in the battery pack of the vehicle may be avoided, and the safety of cooling or extinguishing operations of the battery pack may be improved.

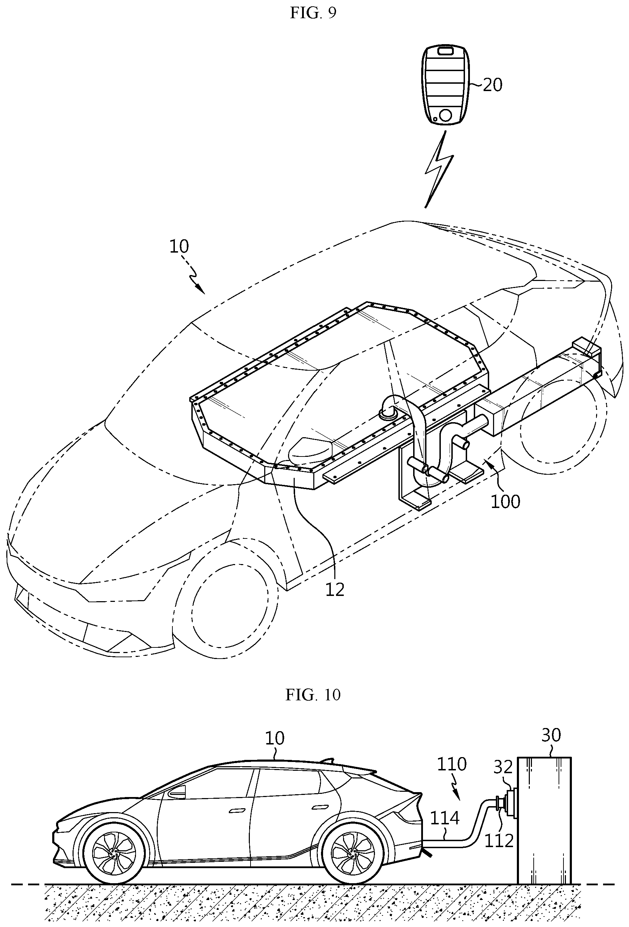

FIG. 9 is a drawing showing a vehicle according to an embodiment of the present disclosure.

As illustrated in FIG. 9, a vehicle 10 according to an embodiment of the present disclosure may include the fire prevention apparatus 100 for a vehicle described above, together with a battery pack 12 that provides electrical energy required for various operations of the vehicle 10.

As described with reference to FIG. 1, the fire prevention apparatus 100 for a vehicle may detect the temperature of the battery pack 12 and output a visual, audible, or audio-visual alarm signal when the temperature exceeds a predetermined threshold value. In some embodiments, the fire prevention apparatus 100 for a vehicle may also be configured to transmit the alarm signal to a communication terminal 20 of a vehicle user.

In addition, the fire prevention apparatus 100 for a vehicle may draw the tubular structure 110, which delivers a fire extinguishing agent to the battery pack 12, to the outside of the vehicle 10 according to a control signal received from a predetermined communication terminal 20.

In an embodiment, the communication terminal 20 may be integrated into a smart key used to control the operation of the vehicle 10, or may be integrated into a wireless communication terminal such as a cell phone of a vehicle user.

FIG. 10 is a drawing illustrating the connection state between a vehicle 10 according to an embodiment of the present disclosure and a fire extinguishing agent supply device 30.

As illustrated in FIG. 10, the coupler 112 of the tubular structure 110 drawn to the outside of the vehicle 10 may be connected to the corresponding coupler 32 of the fire extinguishing agent supply device 30 located at the outside of the vehicle 10. The fire extinguishing agent supplied from the fire extinguishing agent supply device 30 may be delivered to the battery pack of the vehicle 10 through the connection tube 114 of the tubular structure 110.

In FIG. 10, the tubular structure 110 of the fire prevention apparatus for a vehicle is illustrated as being drawn out from the bottom of the corresponding vehicle 10. However, the drawn-out position of the tubular structure 110 may be changed in various ways in consideration of the structure and shape, safety, ease of use, etc. of the vehicle or battery pack. For example, the tubular structure 110 may be configured to be drawn out through the trunk or bonnet of the vehicle.

Meanwhile, the fire extinguishing agent supply device 30 may be implemented as a fixed device such as a fireplug or as a mobile device such as a fire truck.

As described above, according to the present disclosure, a tubular structure provided in a vehicle is configured to deliver an externally supplied fire extinguishing agent to the battery pack of the vehicle, thereby eliminating the need to load a large amount of fire extinguishing agent into the vehicle in preparation for a fire in the battery pack applied to the vehicle, and it is possible to prevent thermal runaway or fire in the battery pack even when the power supply within the vehicle is cut off due to a thermal event occurring in the battery pack.

In addition, by configuring that at least a portion of the tubular structure is drawn to the outside of the vehicle, the risk of a vehicle user or worker having to approach the corresponding vehicle closely to respond to thermal runaway or fire of the battery pack may be avoided, and the safety of cooling or fire extinguishing operations of the battery pack may be improved.

In addition, the opening of the accommodation unit accommodating the tubular structure is configured to automatically open according to a predetermined control signal or the temperature of the battery pack, thereby facilitating the use of the tubular structure and shortening the corresponding time of the vehicle user in the event of thermal runaway or fire of the battery pack.

Furthermore, the embodiments according to the present disclosure may solve various technical problems other than those mentioned in this specification in the corresponding technical field as well as in related technical fields.

The present disclosure has been described with reference to specific embodiments. However, those skilled in the art will clearly understand that various modified embodiments can be implemented within the technical scope of the present disclosure. Therefore, the embodiments disclosed above should be considered from an illustrative rather than a restrictive perspective. In other words, the true technical scope of the present disclosure is indicated by the claims, and all differences within the scope equivalent thereto should be interpreted as being included in the present disclosure.

### [Explanation of reference signs]

10: vehicle
12: battery pack
100: fire prevention apparatus for a vehicle
110: tubular structure
112: coupler
114: connection tube
120: accommodation unit
130: opening device
140: temperature measurement unit
150: control unit
160: alarm output unit
170: communication unit
180: auxiliary battery
190: support structure

## Claims

1. A fire prevention apparatus for a vehicle, which is configured to provide a fire extinguishing agent to a battery pack of the vehicle, comprising:
a tubular structure configured to deliver the fire extinguishing agent to the battery pack; and
an accommodation unit provided in the vehicle to accommodate the tubular structure,
wherein the tubular structure is configured such that at least a portion thereof is able to be drawn to the outside of the vehicle.

2. The fire prevention apparatus for a vehicle according to claim 1,
wherein the tubular structure includes:
a coupler drawn to the outside of the vehicle and configured to connect to a corresponding coupler of a fire extinguishing agent supply device located outside the vehicle; and
a connection tube having one end connected to the coupler and the other end connected to the battery pack or a nozzle configured to spray the fire extinguishing agent to the battery pack.

3. The fire prevention apparatus for a vehicle according to claim 2,
wherein at least a portion of the connecting tube has a bellows structure that is expandable and shrinkable in length.

4. The fire prevention apparatus for a vehicle according to claim 2,
wherein the connection tube includes a curved portion that is concavely curved downwards based on the vehicle to block foreign substances from entering the battery pack.

5. The fire prevention apparatus for a vehicle according to claim 4,
wherein the curved portion has flexibility, and
the fire prevention apparatus for a vehicle further includes a support structure that supports the curved portion so that the shape of the curved portion is maintained.

6. The fire prevention apparatus for a vehicle according to claim 4,
wherein the curved portion has a fixed shape.

7. The fire prevention apparatus for a vehicle according to claim 6,
wherein the curved portion includes a discharge port for discharging foreign substances, and
the fire prevention apparatus for a vehicle further includes a valve for opening or closing the discharge port.

8. The fire prevention apparatus for a vehicle according to claim 1,
wherein the accommodation unit includes an accommodation space for accommodating the tubular structure and an opening communicating with the accommodation space, and
the fire prevention apparatus for a vehicle further includes an opening device configured to open or close the opening.

9. The fire prevention apparatus for a vehicle according to claim 8,
wherein the opening device is configured to automatically open the opening when a predetermined control signal is received or the temperature of the battery pack exceeds a predetermined threshold value in a state that the opening is closed.

10. The fire prevention apparatus for a vehicle according to claim 9,
wherein the opening device includes:
a door configured to be able to open or close the opening; and
a locking unit coupled to the door that closes the opening to lock the door,
the locking unit is configured to release the coupling with the door when the control signal is received or when the temperature of the battery pack exceeds the predetermined threshold value.

11. The fire prevention apparatus for a vehicle according to claim 8,
wherein the accommodation unit is configured to draw at least a portion of the tubular structure accommodated in the accommodation space to the outside of the accommodation unit through the opening when the opening is opened by the opening device.

12. The fire prevention apparatus for a vehicle according to claim 11,
wherein the accommodation unit includes an elastic structure positioned in the accommodation space and configured to draw at least the portion of the tubular structure to the outside of the accommodation unit.

13. The fire prevention apparatus for a vehicle according to claim 12,
wherein the tubular structure includes a flange protruding from an outer surface of at least the portion, and
the elastic structure includes a compression spring having one end fixed in the accommodation space and the other end in contact with the flange.

14. A vehicle comprising the fire prevention apparatus for a vehicle according to any one of claims 1 to 13.
